# EUROPÄISCHE PATENTSCHRIFT

(11) **EP 2 103 221 B1**
(45) Veröffentlichungstag und Bekanntmachung des Hinweises auf die Patenterteilung: **11.09.2013**
(21) Anmeldenummer: 08014530.3
(22) Anmeldetag: 14.08.2008
(51) Int. Cl.: A22C 15/00, B65G 33/02

(54) **Förderschneckenabschnitte**
Screw conveyor sections
Sections de vis transporteuse

(30) Priorität: 20.03.2008 DE 102008015266
(43) Veröffentlichungstag der Anmeldung: 23.09.2009
(73) Patentinhaber: Poly-clip System GmbH & Co. KG, 65795 Hattersheim (DE)
(72) Erfinder: Waldstädt, Manfred, 55124 Mainz (DE); Kessler, Günter, 60388 Frankfurt (DE)
(74) Vertreter: Eisenführ, Speiser & Partner

(56) Entgegenhaltungen:
- EP-A- 0 107 148
- EP-A- 0 647 577
- EP-A- 0 802 133
- EP-A- 1 518 461
- EP-A- 1 897 446
- WO-A-95/21116
- DE-A1- 10 332 329

## Beschreibung

Die Erfindung betrifft eine Transportvorrichtung entsprechend dem Oberbegriff des Anspruchs 1. Insbesondere betrifft die Erfindung eine Transportvorrichtung mit einer Förderschnecke zum Transportieren von an Schlaufen oder dergleichen hängenden Produkten, insbesondere Wurstprodukte, mit einem ersten Förderschneckenabschnitt, einer Antriebseinrichtung für den ersten Förderschneckenabschnitt, wobei das Antriebsmoment über die Außenumfangsfläche des ersten Förderschneckenabschnitts auf diesen übertragen wird, und mit einer ersten Lagereinrichtung für den ersten Förderschneckenabschnitt.

In der Praxis ist es bekannt, dass beispielsweise bei der Herstellung von Würsten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und durch Setzen eines zweiten Clips verschlossen. Wenn das wurstförmige Produkt bzw. das Wurstprodukt zur weiteren Verarbeitung aufgehängt werden soll, wird üblicherweise in den zweiten Clip ein Aufhängeelement, meist eine Fadenschlaufe, eingelegt und mit diesem zweiten Clip an dem Wurstprodukt befestigt. Anschließend werden die Wurstprodukte mittels einer Transportvorrichtung aus der Clipmaschine gefördert und auf Speicherstangen aufgereiht, um weiterverarbeitet, beispielsweise geräuchert, zu werden.

Eine Transportvorrichtung der eingangsgenannten Art ist aus der EP-A-1 897 446 bekannt. Diese bekannte Transportvorrichtung zum Transportieren von an Schlaufen hängenden Gegenständen weist eine Welle auf, auf deren Außenfläche eine Schnecke aufgebracht ist. Die Welle ist von drei gleichmäßig um ihren Umfang verteilten Lagerrollen abgestützt, von denen eine ein Antriebsmoment auf die Welle überträgt. In dem durch die Schnecke gebildeten Profil werden die an den die Welle umgreifenden Schlaufen hängenden Produkte entlang des durch die Welle gebildeten linearen Förderweges transportiert.

Mit der bekannten Transportvorrichtung ist ein Transport von an Schlaufen hängenden Gegenständen jedoch nur linear und in horizontaler Richtung vorgesehen. Das erschwert den Anschluss der bekannten Transportvorrichtung an vorrausgehende oder nachfolgende Maschinen und Vorrichtungen bzw. schränkt diesen ein, da die jeweilige Zuführ- bzw. Austrageinrichtung solcher Maschinen mit der Höhe der Transportvorrichtung abgestimmt werden muss.

Es ist daher Aufgabe der vorliegenden Erfindung, eine Transportvorrichtung der eingangs genannten Art zur Verfügung zu stellen, die den Transport von an Schlaufen hängenden Gegenständen flexibler gestaltet und die Anbindung an vorgeschaltete oder nachgeordnete Vorrichtungen erleichtert.

Die vorstehende Aufgabe wird durch die Merkmale des Anspruchs 1 gelöst. In den sich daran anschließenden Ansprüchen 2 bis 13 finden sich vorteilhafte Ausgestaltungen.

Es wird eine Transportvorrichtung mit einer Förderschnecke zum Transportieren von an Schlaufen oder dergleichen hängenden Produkten, insbesondere Wurstprodukte, vorgeschlagen. Die Transportvorrichtung weist einen ersten Förderschneckenabschnitt und eine Antriebseinrichtung für den ersten Förderschneckenabschnitt auf. Dabei wird das Antriebsmoment über die Außenumfangsfläche des ersten Förderschneckenabschnitts auf diesen übertragen. Die Transportvorrichtung weist weiterhin eine erste Lagereinrichtung für den ersten Förderschneckenabschnitt auf. Weiterhin ist in einer bevorzugten Ausführung der erfindungsgemäß vorgesehen, dass in Förderrichtung ein sich unmittelbar an den ersten Förderschneckenabschnitt anschließender zweiter Förderschneckenabschnitt angeordnet ist. Auf diese Weise kann die Länge der Transportvorrichtung variiert werden, wodurch die Anbindung an vorgeschaltete oder nachgeordnete Vorrichtungen flexibler gestaltet und dadurch weiter erleichtert werden kann. Gleichzeitig kann dabei die Länge der einzelnen Förderschneckenabschnitte begrenzt werden.

Um eine starre Achse hindurchführen zu können, die zur Befestigung beispielsweise einer Ein- und/oder Ausfädelhilfe an den stirnseitigen Enden des Förderschneckenabschnitts dienen kann, sind der erste Förderschneckenabschnitt und der zweite Förderschneckenabschnitt als Hohlwellen gestaltet.

Das rechte Ende des zweiten Förderschneckenabschnitts taucht in das linke Ende des ersten Förderschneckenabschnitts ein. So entsteht ein lückenloser Übergang vom ersten auf den zweiten Förderschneckenabschnitt, wodurch ein reibungsloser Weitertransport der daran hängenden Produkten gewährleistet werden kann.

Weist die Mittellängsachse des zweiten Förderschneckenabschnitts gegenüber der Mittellängsachse des ersten Förderschneckenabschnitts eine Winkelabweichung auf, kann eine Änderung des Förderwegs sowohl hinsichtlich der Zuführ-oder Austragshöhe als auch hinsichtlich der Förderrichtung realisiert werden.

Um einen sanften Übergang vom ersten Förderschneckenabschnitt auf den zweiten Förderschneckenabschnitt zu erreichen, beträgt die Winkelabweichung der Mittellängsachse des zweiten Förderschneckenabschnitts gegenüber der Mittellängsachse des ersten Förderschneckenabschnitts weniger als 90°.

Sind die Mittellängsachsen des ersten und zweiten Förderschneckenabschnitts in einer zumindest annähernd vertikal verlaufenden Ebene angeordnet, können in besonders einfacher Weise zwei aufeinanderfolgende Maschinen mit unterschiedlicher Austrags- bzw. Zuführhöhe mittels der erfindungsgemäßen Transportvorrichtung miteinander gekoppelt werden.

Die Winkelabweichung kann in eine beliebige und von der durch die Mittellängsachse des ersten Förderschneckenabschnitts vorgegebenen Richtung verschiedene Richtung weisen. Eine Richtungsänderung im Förderweg ist damit sowohl in der Horizontalen als auch in der Vertikalen möglich.

Um eine sichere Lagerung des ersten Förderschneckenabschnitts zu gewährleisten, ist in einer weiteren vorteilhaften Ausführung vorgesehen, dass dieser eine zweite Lagereinrichtung aufweist. Das Vorsehen einer zweiten Lagereinrichtung ermöglicht ebenfalls die Vergrößerung der axialen Länge des ersten Förderschneckenabschnitts, ohne diesen zu destabilisieren.

Wird der zweite Förderschneckenabschnitt an der Verbindungsstelle zum ersten Förderschneckenabschnitt von diesem geführt, kann es zur Lagerung des zweiten Förderschneckenabschnitts genügen, wenn dieser wenigstens eine Lagereinrichtung aufweist.

Die Lagereinrichtungen des ersten und des zweiten Förderschneckenabschnitts können auf verschiedene Weise gebildet werden. In einer bevorzugten Ausgestaltung sind sie jeweils durch drei vorzugsweise in einer gleichmäßigen Teilung in Umfangsrichtung der Förderschneckenabschnitte angeordnete Stützrollen gebildet, wobei es insbesondere vorteilhaft ist, zwei der Stützrollen symmetrisch unterhalb der Welle und die dritte zentrisch über der Welle anzuordnen. Durch diese Maßnahme wird einerseits eine sichere Lagerung der Welle gewährleistet. Andrerseits wird ein unterbrechungsfreier Transportweg für die an Schlaufen oder dergleichen hängenden Produkte auf den so gelagerten Förderschneckenabschnitten geschaffen, da die Schlaufen während des Transports zwischen den zwei symmetrisch unterhalb der Welle angeordneten und einen Spalt bildenden Stützrollen entlang geführt werden.

Um einen reibungslosen und kontinuierlichen Transport der an Schlaufen hängenden Produkte zu gewährleisten, ist es weiterhin vorteilhaft, wenn der zweite Förderschneckenabschnitt antreibbar ist. Dieser sollte weiterhin synchron mit dem ersten Förderschneckenabschnitt antreibbar sein, um Aufstauungen der zu transportierenden Produkte am Übergang zwischen dem ersten und dem zweiten Förderschneckenabschnitt zu vermeiden.

Um beide Förderschneckenabschnitte mit der gleichen Fördergeschwindigkeit betreiben zu können, sind in einer bevorzugten Ausführung der ersten und der zweiten Förderschneckenabschnitt durch eine gemeinsame Antriebseinrichtung antreibbar, die vorzugsweise durch die Antriebseinrichtung des ersten Förderschneckenabschnitts gebildet sein kann.

Das Antriebsmoment wird dabei jeweils durch eine Stützrolle auf den ersten und auf den zweiten Förderschneckenabschnitt übertragen. Durch diese Maßnahme wird ein einfacherer Aufbau durch Integrieren des Antriebs in die Lagerung der Förderschneckenabschnitte erreicht, sodass keine Antriebsvorrichtungen zusätzlich zur Lagerung vorgesehen werden müssen.

Die Übertragung des Antriebsmoments durch die jeweils eine Stützrolle kann dabei auf verschiedene Weise erreicht werden. Ist vorgesehen, dass die antreibende Stützrolle durch einen Formschluss mit dem ersten und dem zweiten Förderschneckenabschnitt in Eingriff steht, wird eine schlupffreie Antriebsmomentübertragung gewährleistet. Dies kann dadurch realisiert werden, dass die Stützrolle und ein entsprechender Abschnitt des Förderschneckenabschnitts korrespondierende Verzahnungen aufweisen.

Steht dagegen die jeweils eine Stützrolle durch einen Reibschluss mit dem ersten und dem zweiten Förderschneckenabschnitt in Eingriff, genügt eine konstruktiv einfacher zu realisierende und einen Reibschluss fordernde Oberfläche. Diese kann z.B. durch eine Aufrauhung oder eine gummierte Auflage gebildet sein.

Um eine gleiche Fördergeschwindigkeit der beiden Förderschneckenabschnitte zu erreichen, ist es vorteilhaft, wenn die Stützrollen zur synchronen Antriebsmomentübertragung durch eine Kardanwelle verbunden sind.

Zur räumlichen Anordnung der wenigstens zwei Förderschneckenabschnitte zueinander genügt die Lagerung der Förderschneckenabschnitte mittels der vorgenannten Stützrollen. Um aber ein Verschieben der Förderschneckenabschnitte entlang ihrer Mittellängsachsen zu vermeiden sind axiale Sicherungen notwendig. Hierzu sind in einer bevorzugten Ausbildung der erfindungsgemäßen Transportvorrichtung der erste und der zweite Förderschneckenabschnitt jeweils koaxial auf einem ersten und einem zweiten Achsabschnitt drehbar angeordnet. Dabei kann bereits die Gestaltung der Lager oder der Lagersitze zwischen den Förderschneckenabschnitten und den Achsabschnitten als axiale Sicherung genügen.

Die axialen Sicherungen können weiter verbessert und/oder vereinfacht werden, wenn der erste und der zweite Achsabschnitt mittels eines Übergangsstücks fest miteinander verbunden sind. Durch ein solches Übergangsstück ist weiterhin einerseits die Winkelabweichung der Mittellängsachse des zweiten Förderschneckenabschnitts gegenüber der Mittellängsachse des ersten Förderschneckenabschnitts festgelegt. Andererseits kann durch einen Austausch dieses Übergangsstücks die Winkelabweichung der Mittellängsachsen relativ einfach verändert werden.

Um ein Ein- und/oder Ausfädeln der Schlaufen auf und von der Transporteinrichtung zu erleichtern, sind am zuführseitigen und/oder am abführseitigen Ende der Transportvorrichtung Ein- und/oder Ausfädelhilfen für die Schlaufen vorgesehen. Hierdurch kann die erfindungsgemäße Transportvorrichtung z.B. aus Austragstrecke einer Clipmaschine nachgeschaltet werden.

In einer bevorzugten Ausführung der Transporteinrichtung ist im Bereich des ersten Förderschneckenabschnitts ein Auslauf für das an Schlaufen hängende Produkt angeordnet. Dieser kann ein antreibbares Transportband aufweisen. Des weiteren kann der Auslauf einen ersten, horizontal ausgerichteten Abschnitt und einem zweiten in Transportrichtung schräg nach unten geneigten Abschnitt enthalten. Ein solcher Auslauf ermöglicht das sichere und beschädigungsfreie Austragen der Wurstprodukte aus der Clipmaschine.

Dabei ist es weiterhin vorteilhaft, wenn die Länge des ersten Abschnitts und die Neigung des zweiten Abschnitts des Transportbandes einstellbar sind, um eine Anpassung des Auslaufs an die Länge und/oder das Kaliber des Wurstprodukts vornehmen zu können.

Üblicherweise ist der Auslauf fest mit dem Maschinenrahmen der Transportvorrichtung verbunden. Es kann aber alternativ vorgesehen sein, dass an der Verbindungsstelle der Auslauf mit dem Maschinenrahmen ein Gelenk vorgesehen ist, mittels dem der Auslauf horizontal gegenüber dem ersten Förderschneckenabschnitt verschwenkbar ist. Hierdurch können Einricht- und Wartungsarbeiten durch einen verbesserten Zugang zur Clipmaschine erleichtert werden. Hierzu ist es weiterhin vorteilhaft, wenn das clipmaschinenseitige Ende des Auslaufs vom Clipmaschinenausgang wegschwenkbar ist.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische Ansicht der erfindungsgemäßen Transportvorrichtung im eingebauten Zustand;

- Fig. 2:: eine Schnittdarstellung eines Abschnitts der erfindungsgemäßen Transportvorrichtung;
- Fig. 3:: eine Ausführung eines schwenkbaren Auslaufs für die Wurstprodukte in der eingeschwenkten Position; und
- Fig. 4:: den schwenkbaren Auslauf für die Wurstprodukte nach Fig. 3 in der ausgeschwenkten Position.

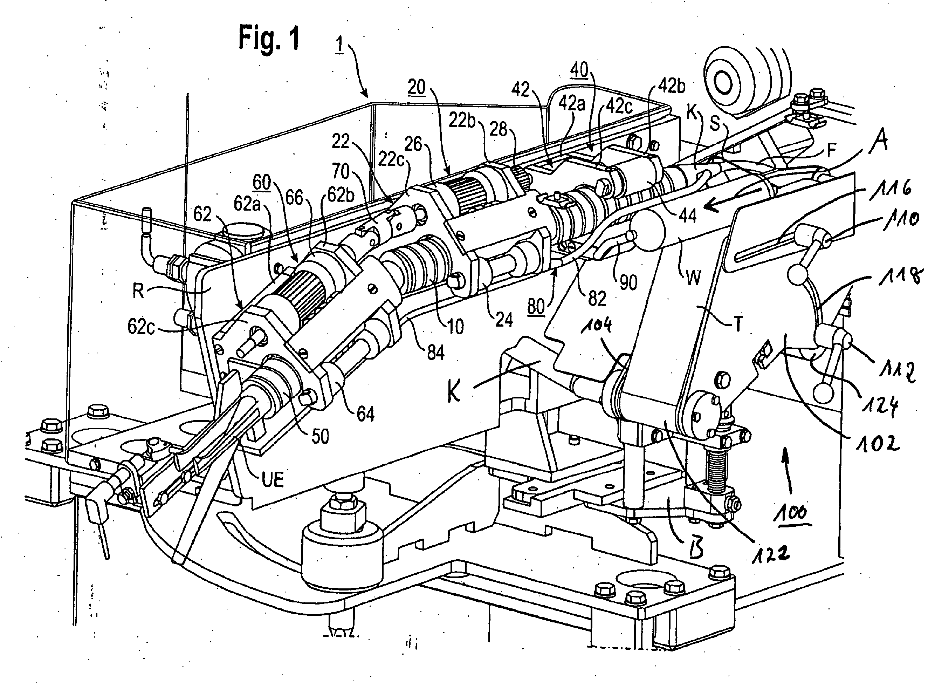

Fig. 1 zeigt ein Ausführungsbeispiel der erfindungsgemäßen Transportvorrichtung im eingebauten Zustand in einer Wurstclipmaschine. Die Transportvorrichtung wird hier als Austragstrecke 1 der nicht näher dargestellten Clipmaschine für die dort fertiggestellten Wurstprodukte W eingesetzt.

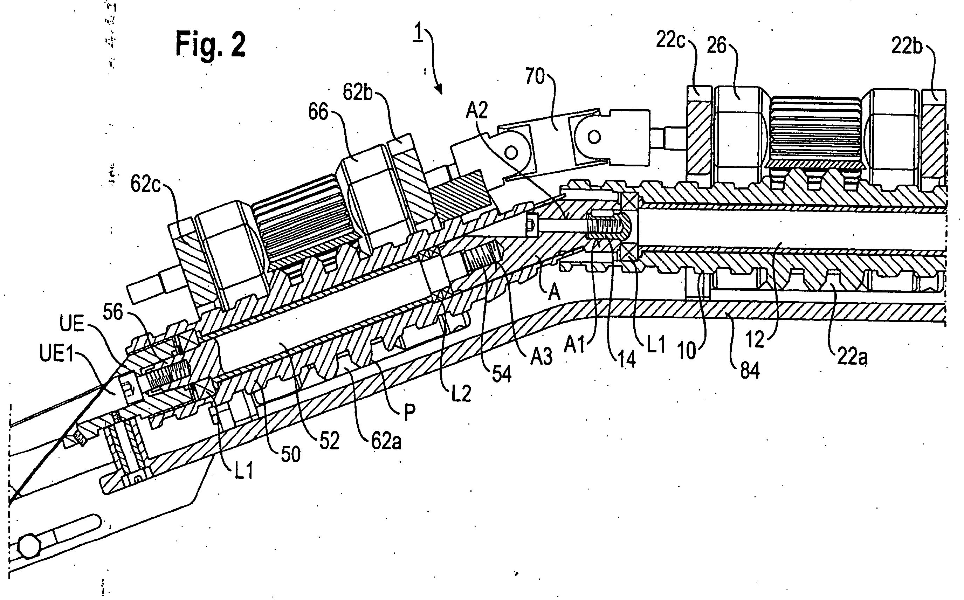

Die in Fig.1 dargestellte Austragstrecke 1 weist einen ersten hohlzylindrischen Förderschneckenabschnitt 10 auf. Dieser Förderschneckenabschnitt 10 ist im Bereich seiner Enden in einer ersten Lagereinheit 20 und in einer zweiten Lagereinheit 40 gelagert, die an einem vertikalen Abschnitt eines Maschinenrahmens R befestigt sind. Der Förderschneckenabschnitt 10 ist im Wesentliche horizontal und parallel zum Maschinenrahmen R ausgerichtet. Der Förderschneckenabschnitt 10 hat die Form eines Hohlzylinders mit einem auf seiner Oberfläche verlaufenden Profil P, das als Schneckenprofil oder Trapezgewinde gestaltet ist (gl. Auch Fig. 2). Er kann aus jedem geeigneten Metall, vorzugsweise aus Edelstahl gefertigt sein.

Das in der Fig.1 rechte Ende des ersten Förderschneckenabschnitts 10 weist in Richtung der Clipmaschine. Um das Aufhängelement des Wurstproduktes W, das hier durch eine Schlaufe S gebildet ist, sicher auf den ersten Förderschneckenabschnitt 10 auffädeln zu können, ist an dessen rechtem Ende eine Auffädelhilfe in Form eines Auffädelkegels K angeordnet. Der förderschneckenseitige Außendurchmesser des Auffädelkegels K entspricht dem Außendurchmesser des ersten Förderschneckenabschnitts 10. Das sich verjüngende clipmaschinenseitige Ende des Auffädelkegels K geht in eine Fangvorrichtung F zum Einfangen der Schlaufe S über. Die Fangvorrichtung F reicht mit ihrem rechten Ende bis unmittelbar in den Bereich der Verschließwerkzeuge der Clipmaschine und greift direkt in die Schlaufen S ein, während diese an dem Wurstprodukt W befestigt werden.

Die beiden Lagereinheiten 20, 40 des ersten Förderschneckenabschnitts 10 sind in der Weise in Förderrichtung zueinander beabstandet angeordnet, dass in Förderrichtung zunächst die zweite Lagereinheit 40 und anschließend die erste Lagereinheit 20 vorgesehen ist. Besitzt der erste Förderschneckenabschnitt 10 nur eine geringe axiale Länge, braucht die zweite Lagereinheit 40 u.U. nicht vorgesehen werden.

Die beiden Lagereinheiten 20, 40 des ersten Förderschneckenabschnitts 10 weisen jeweils einen im Wesentlichen U-förmigen Rahmenträger 22, 42 aus einem geeigneten Metall auf, mit dem sie am Maschinenrahmen R befestigt sind. Die Rahmenträger 22, 42 bestehen jeweils aus einem Bodenteil 22a, 42a, das an dem Maschinenrahmen R befestigt ist, sowie beabstandet zueinander angeordnete Schenkelteilen 22b, 22c, 42b, 42c, die an den Bodenteilen 22a, 42a befestigt und senkrecht zum Maschinenrahmen R sowie senkrecht zur Mittellängsachse des Förderschneckenabschnitts 10 ausgerichtet sind. Die Schenkelteile 22b, 22c, 42b, 42c weisen kreisförmige und zu jeweils einem Randabschnitt offene Ausnehmungen auf, durch die der erste Förderschneckenabschnitt 10 verläuft.

Die Lagereinheit 40 enthält weiterhin drei vorzugsweise gleichmäßig um den Umfang des Förderschneckenabschnitts 10 angeordnete Stützrollen 44. Die zylindrischen Stützrollen 44 sind z.B. aus Kunststoff gefertigt. Sie sind parallel zum Förderschneckenabschnitt 10 ausgerichtet und berühren diesen linienförmig entlang seiner Oberfläche. Die Länge der Stützrollen 44 entspricht im Wesentlichen dem lichten Abstand der zueinander gerichteten Seiten der Schenkelteile 42b, 42c des Rahmenträgers 42. Die Stützrollen 44 sind mittels Bolzen, die in den Schenkelteilen 42b, 42c befestigt sind Rahmenträgers 42 drehbar gelagert.

Auch die im Bereich des linken Endes des ersten Förderschneckenabschnitts 10 angeordnete erste Lagereinheit 20 weist drei vorzugsweise gleichmäßig um den Umfang des Förderschneckenabschnitts 10 angeordnete Stützrollen 24, 26 auf. Die im Wesentlichen zylindrischen Stützrollen 24, von denen in Fig. 1 nur eine dargestellt ist, sind symmetrisch unterhalb des Förderschneckenabschnitts 10 unter Ausbildung eines Spaltes, entlang dem die Schlaufen S während des Fördervorgangs durch die Lagereinheit 20 geführt werden kann, angeordnet. Sie sind auf die gleiche Weise befestigt, wie die Stützrollen 44 der zweiten Lagereinheit 40. Im Gegensatz zu diesen weisen die Stützrollen 24 einen sich über ihren mittleren Abschnitt erstreckenden zylindrischen Teil auf, dessen Außendurchmesser geringer ist als der der rechts und links an diesen angrenzenden Endabschnitte. Die dritte Stützrolle 26 der Lagereinheit 20 hat einen größeren Außendurchmesser als die beiden Stützrollen 24. Auch sie besitzt, wie die beiden Stützrollen 24, einen mittleren Abschnitt, dessen Außendurchmesser geringer ist als der der rechts und links an diesen angrenzenden Endabschnitte. In diesen mittleren Abschnitt der Stützrolle 26 ist eine Verzahnung eingearbeitet, sodass sie als Ritzel fungieren kann. Weiterhin ist die Welle, auf der die Stützrolle 26 angebracht ist, nach rechts über das Schenkelteil 22b hinaus, also in Richtung der Clipmaschine, verlängert. Auf dieser Verlängerung ist ein Ritzel 28 angebracht, über das die Stützrolle 26 antreibbar ist.

Der erste Förderschneckenabschnitt 10 weist im Bereich der durchmesserreduzierten Abschnitte der Stützrollen 24, 26 eine entsprechende annähernd zylindrische Durchmessererweiterung auf. Diese ist mit einer zur Verzahnung der Stützrolle 26 korrespondierenden Verzahnung versehen. Über diese Verzahnungen stehen die Stützrolle 26 und der Förderschneckenabschnitt 10 in formschlüssigem Eingriff. Die über das Ritzel 28 angetriebene Stützrolle 26 überträgt dadurch schlupffrei das Antriebsmoment auf den ersten Förderschneckenabschnitt 10.

Wie weiterhin aus Fig. 1 zu entnehmen ist, schließt sich an das linke Ende des ersten Förderschneckenabschnitts 10 ein zweiter Förderschneckenabschnitt 50 an. Dieser ist, wie auch der erste Förderschneckenabschnitt 10, parallel zum Maschinenrahmen R ausgerichtet. Im Gegensatz zu diesem weist der zweite Förderschneckenabschnitt 50 aber eine von links nach rechts verlaufende Neigung nach unten auf. Sein rechtes zum ersten Förderschneckenabschnitt 10 gerichtetes Ende befindet sich mit diesem auf gleicher Höhe, während das linke Ende des zweiten Förderschneckenabschnitts 50 tiefer liegt.

Das rechte Ende des im Wesentlichen hohlzylindrischen zweiten Förderschneckenabschnitts 50 ist konisch ausgebildet. Dabei verringert sich sein Außendurchmesser soweit, dass er kleiner ist als der Innendurchmesser des ebenfalls hohlzylindrischen ersten Förderschneckenabschnitts 20. Auf diese Weise kann das rechte Ende des Förderschneckenabschnitts 50 in das linke Ende des Förderschneckenabschnitts 20 zumindest teilweise eingesteckt werden, um eine lückenlosen Übergang zwischen den Förderschneckenabschnitten 20, 50 zu schaffen.

Der zweite Förderschneckenabschnitt 50 ist durch eine dritte Lagereinheit 60 gelagert. Diese ist baugleich zur Lagereinheit 20, weshalb für eine detaillierte Beschreibung auf diese verwiesen wird. Die dritte Lagereinheit 60 ist mit dem Bodenteil 22a des Rahmenträgers 62 an dem Maschinenrahmen R befestigt. Dabei weist sie die gleiche Neigung auf, wie der zweite Förderschneckenabschnitt 50, der von den Stützrollen 64, 66 in der im Bezug auf die Lagereinheit 20 beschriebene Weise gestützt wird.

Wie die Stützrolle 26 der Lagereinheit 20 weist auch die Stützrolle 66 der Lagereinheit 60 einen im Durchmesser reduzierten und mit einer Verzahnung versehenen, zylindrischen Mittelteil auf. Sie ist über eine ein Kardangelenk aufweisende Welle 70 mit der Stützrolle 26 der zweiten Lagereinheit 20 verbunden und über diese mit der gleichen Drehzahl antreibbar. Auch der zweite Förderschneckenabschnitts 50 weist zum Antrieb im Bereich der Verzahnung der Stützrolle 66 eine zylindrische Durchmessererweiterung auf, mit einer zur Verzahnung der Stützrolle 66 korrespondierenden Verzahnung. Durch die identische Gestaltung der Lagereinheiten 20, 60 und die drehstarre Verbindung der antreibbaren Stützrollen 26, 66 wird eine synchrone Drehbewegung der ersten und zweiten Förderschneckenabschnitte 10, 50 gewährleistet.

Am linken, von dem ersten Förderschneckenabschnitt 10 wegweisenden Ende des zweiten Förderschneckenabschnitts 50 ist ein Übergabeelement UE vorgesehen, dessen rechtes förderschneckenabschnittseitiges zylindrisches Ende einen im Wesentlichen dem Förderschneckenabschnitt 50 entsprechenden Durchmesser aufweist, um einen annähernd stufenlosen Übergang zu gewährleisten. Das rechte Ende des Übergabeelements UE ist gabelförmig gestaltet und bildet den Abschluss der als Austragstrecke 1 eingerichteten erfindungsgemäßen Transportvorrichtung.

Weiterhin ist in Fig.1 eine Führungsvorrichtung 80 dargestellt. Sie erstreckt sich in wesentlichen zwischen dem Auffädelkegel K und dem Übergabeelement UE. Der erste Abschnitt 82 der Führungsvorrichtung 80 hat einen kreisförmigen Querschnitt. Er tritt etwa mittig aus dem Auffädelkegel K aus, verläuft horizontal unmittelbar neben dem ersten Förderschneckenabschnitt 10 und parallel zu diesem in Richtung des übergabeseitigen Endes. Zwischen der ersten und zweiten Lagereinheit 20, 40 wird er in einem Bogen mittig unter den ersten Förderschneckenabschnitt 10 geführt. Etwa ab der zweiten Lagereinheit 20 geht der erste Abschnitt 82 der Führungsvorrichtung 80 in einen zweiten Abschnitt 84 der Führungsvorrichtung 80 über. Der zweite Abschnitt 84 hat einen annähernd rechteckigen Querschnitt mit abgerundeten Kanten. Die Breite des Querschnitts entspricht annähernd dem Durchmesser der Förderschneckenabschnitte 10, 50. Der zweite Abschnitt 82 der Führungsvorrichtung 80 verläuft mittig unter den Förderschneckenabschnitten 10, 50 und parallel zu diesen. Er endet unterhalb des rechten zylindrischen Endes des Übergabeelements UE und ist an diesem befestigt.

In Fig.1 ist weiterhin eine Führungsschiene 90 gezeigt, die sich etwa vom clipmaschinenseitigen Ende des Auffädelkegels K bis zum Schenkelteil 40c der Lagereinheit 40 und parallel zum ersten Förderschneckenabschnitt 10 erstreckt. Sie verläuft auf der dem Maschinenrahmen R gegenüberliegenden Seite der Austragstrecke 1 und mit geringem Abstand unterhalb des ersten Förderschneckenabschnitts 10.

Die in Fig.1 teilweise dargestellte Wurstclipmaschine umfasst weiterhin einen Auslauf 100 für die aus der Clipmaschine auszutragenden Wurstprodukte W. Der Auslauf 100 umfasst ein Transportband T mit einem ersten waagerechten Abschnitt und einem sich in Austrag- bzw. Förderrichtung anschließenden, stark nach unten geneigten Abschnitt. Der waagerechte erste Abschnitt des Transportbandes T ist ungefähr auf Höhe der Unterkante des ersten Förderschneckenabschnitts 10 ausgerichtet und erstreckt sich dabei von Ende der Clipmaschine bis etwa zur Lagereinrichtung 40. Eine an dieser Stelle des Auslaufs 100 befindliche horizontal ausgerichtete, in Fig. 1 nicht näher dargestellte erste Walze 120 lenkt das Transportband T in einem Winkel nach unten, wo es um eine zweite Walze 122 entgegen der Austragrichtung A zum Anfang des waagerechten Abschnitts hin umgelenkt wird. Die Umlenkrollen 120, 122 sind zwischen einem linken und einem rechten, vertikal in Austragrichtung ausgerichteten und im wesentlichen ebenen Rahmenelementen 102, 104 angeordnet und zwischen diesen um ihre waagerecht ausgerichtete Längsachse drehbar gelagert.

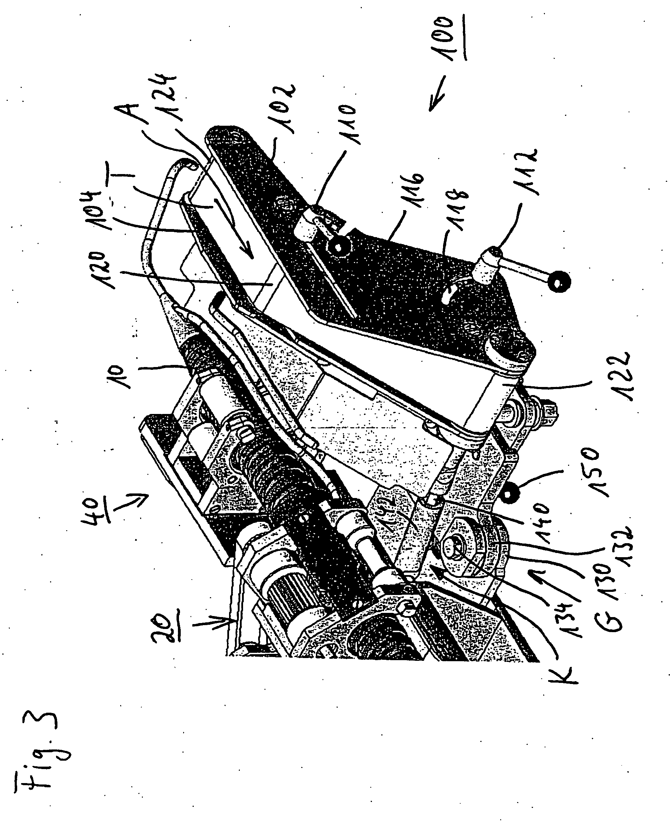

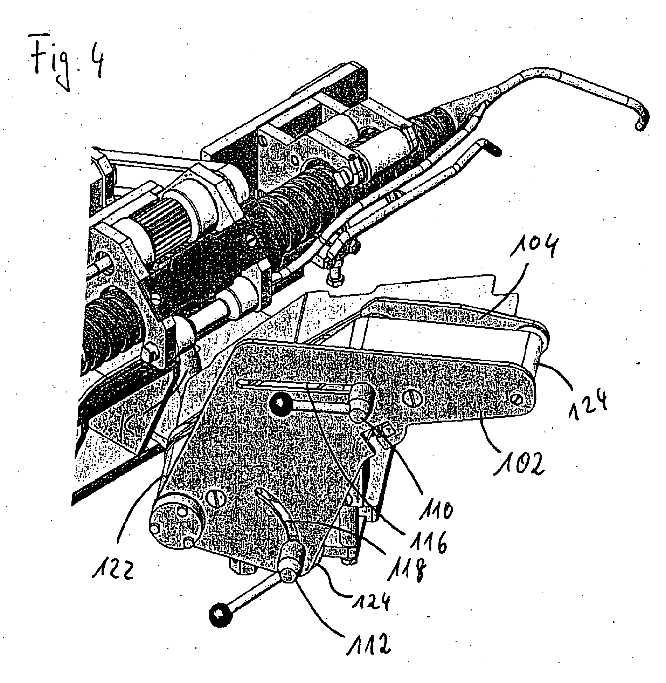

Der Auslauf 100 umfasst weiter einen ersten und einen zweiten Stellgriff 110, 112. Mit Hilfe des ersten Stellgriffs 110 ist die Länge des ersten Abschnitts des Transportbandes T sowie die Steigung des zweiten, schräg nach unten verlaufenden Abschnitts des Transportbandes T einstellbar, wie dies später im Zusammenhang mit den Fig. 3 und 4 genauer erläutert wird. Hierzu weist das linke Rahmenelement 102 ein horizontal verlaufendes Langloch 116 auf, in dem die waagerecht ausgerichtete Längsachse der ersten Walze 120 in Austragrichtung A reversibel verschiebbar und durch den ersten Stellgriff 110 fixierbar ist. Mit dem zweiten Stellgriff 112 ist eine nicht Spannwalze 124 auf die gleiche Weise, wie die erste Walze 120 betätigbar, um am Transportband T eine gewünschte Spannung einzustellen bzw. nach Einstellen der Länge des ersten Abschnitts und der Neigung des zweiten, schräg nach unten verlaufenden Abschnitts des Transportbandes T eine entsprechende Spannung wieder herzustellen. Zum reversiblen Verschieben der Spannwalze 124 ist in dem linken Rahmenelement 102 ein kreissegmentförmiges Langloch 118 angeordnet.

Das linke Rahmenelement 102 ist im Ausführungsbeispiel nach Fig. 1 zweiteilig gestaltet. Die beiden Teile des Rahmenelements 102 sind aber fest miteinander verbunden, sodass sie wie ein einziges Bauteil fungieren. In einem weiteren Ausführungsbeispiel, wie es im Zusammenhang mit Fig. 3 und 4 erläutert wird, besteht das Rahmenelement 102 aus nur einem Teil.

Wie weiter in Fig. 1 zu sehen ist, ist die zweite Walze 120 über eine Kardanwelle K antreibbar. Die Kardanwelle K kann beispielsweise mit dem Antrieb für die Förderschneckenabschnitte 10, 50 verbunden und so auf deren Antriebsgeschwindigkeit abgestimmt sein. Es kann aber auch ein separater Antrieb vorgesehen sein, der über eine entsprechende Steuerung mit der Fördergeschwindigkeit der Förderschneckenabschnitte 10, 50 abgestimmt wird.

Der Auslauf 100 entsprechend Fig. 1 ist mittels verschiedener nicht näher bezeichneter Befestigungselemente auf einer Basisplattform oder Basis B gefestigt. Die Basis B wiederum ist fest mit dem Maschinenrahmen der Austragstrecke 1 verbunden, sodass der Auslauf 100 eine feste definierte Ausrichtung zur Austragstrecke 1 einnimmt.

Fig.2 zeigt eine Schnittdarstellung entlang einer durch die Mittelängsachsen der Förderschneckenabschnitt 10, 50 verlaufenden Schnittebene im Bereich der Lagereinheiten 20, 60. Wie Fig.2 zu entnehmen ist, ist der erste Förderschneckenabschnitt 10 koaxial auf einem ersten Achsabschnitt 12 angeordnet und mittels geeigneter, nicht näher spezifizierte Lager L1, L2 um diesen drehbar. Der zweite Förderschneckenabschnitt 50 ist koaxial auf einem zweiten Achsabschnitt 52 angeordnet und ebenfalls mittels geeigneter, nicht näher spezifizierte Lager L1, L2 um diesen drehbar. Es sei angemerkt, dass die Lagerung der nicht dargestellten rechten Seite der ersten Förderschneckenabschnitts 10 der Lagerung der rechten Seite der zweiten Förderschneckenabschnitts 50 entsprechen kann.

Weiterhin ist zu sehen, dass die Förderschneckenabschnitte 10, 50 im Bereich ihrer Enden einen vergrößerten Innendurchmesser aufweisen. Dies ermöglicht ein besseres Ineinandergreifen der zueinander weisenden Enden der Förderschneckenabschnitte 10. 50.

Die Enden der Achsabschnitte 12, 52 sind im Anschlussbereich des zweiten Förderschneckenabschnitts 50 an den ersten Förderschneckenabschnitt 20 über einen Übergangsstück in Form eines Adapters A miteinander verbunden. Der Adapter A hat einen kreisförmigen Querschnitt und weist eine Abwinkelung auf, die der Winkelabweichung der Mittellängsachsen der Förderschneckenabschnitte 10. 50 entspricht. Das in Fig.2 rechte Ende des Adapters A weist eine erste zylindrische Bohrung A1 auf, deren Innendurchmesser dem Außendurchmesser des linken Endabschnitts 14 des ersten Achsabschnitts 12 entspricht. Eine Nut-Federverbindung schafft eine drehfeste Verbindung zwischen dem Adapter A und dem ersten Achsabschnitt 12. Durch eine koaxial zu der zylindrischen Bohrung A1 im rechten Ende des Adapters A verlaufende und einen Absatz aufweisende Durchgangsbohrung A2 ist eine Schraube geführt. Diese Schraube ist in eine koaxial im linken Endabschnitt 14 des ersten Achsabschnitts 12 verlaufende Gewindebohrung geschraubt, wodurch ein axiales Auseinandergleiten des Adapters A und des ersten Achsabschnitts 12 verhindert wird.

Im linken Endabschnitt des Adapters A ist eine koaxial verlaufende Gewindebohrung A3 angeordnet, in die der zweite Achsabschnitt 52 mit einem an seinem rechten Ende 54 befindlichen Außengewinde eingeschraubt wird.

Das zylindrische rechte Ende des Übergabeelements UE weist eine Durchgangsbohrung UE1 sowie einen etwa mittig darin umlaufenden Rand auf. Mit diesem Ende ist das Übergabeelement UE auf das linke Ende 56 des zweiten Achsabschnitts 52 aufgesteckt. Eine Schraube, die durch die Durchgangsbohrung UE1 des Übergabeelements UE gesteckt und in ein entsprechendes Innengewinde im linksseitigen Ende 56 des zweiten Achsabschnitts 52 verschraubt ist; sichert das Übergabeelement UE gegen Abziehen vom zweiten Achsabschnitt 52. Weiterhin ist zu erkennen, dass die sich berührenden zylindrischen Flächen des zweiten Achsabschnitts 52 und des Übergabeelements UE konisch ausgeführt sind, wodurch eine reibschlüssige Verbindung entsteht, die ein Verdrehen der Abschnitte gegeneinander verhindert.

Die Lagersitze der Lager L1, L2 sind durch entsprechende Absätze auf den Achsabschnitten 12, 52 gebildet. Die axiale Sicherung der Lager wird erreicht, indem die entsprechenden Abschnitte des Adapters A und des Übergabeelements UE gegen die nicht näher bezeichneten Lagerinnenringe verspannt werden.

Weiterhin zeigt Fig.2 die Durchmessererweiterungen des ersten und zweiten Seite der ersten Förderschneckenabschnitts 10, 50 im Bereich der Lagereinheiten 20, 60. Es ist zu erkennen, dass diese Durchmessererweiterungen durch eine Erhöhung des Profils P im diesem Bereich realisiert wurde.

Wie in Fig. 2 weiterhin zu sehen ist, kommen die Flanken der Profilerhöhungen des ersten und zweiten Förderschneckenabschnitts 10, 50 mit den nach innen weisenden Flanken der Endabschnitte der Stützrollen 24, 26, 64, 66 in Anlage. Hierdurch kann eine weitere Sicherung der Förderschneckenabschnitte 10, 50 gegen axiales Verschieben erreicht werden.

Fig. 3 zeigt eine schwenkbare Ausführung des anhand von Fig. 1 erläuterten Auslaufs 100 für die Wurstprodukte W in der eingeschwenkten Position, also die Position, die der Auslauf 100 während der Produktion von Wurstprodukten einnimmt.

Wie bereits vorstehend an Fig. 1 erläutert, ist der Auslauf 100 so neben dem ersten Förderschneckenabschnitt 10 angeordnet, dass der erste waagerechte, erste Abschnitt des Transportbandes T ungefähr auf Höhe der Unterkante des ersten Förderschneckenabschnitts 10 ausgerichtet ist und sich dabei von Ende der Clipmaschine bis etwa zur Lagereinrichtung 40 erstreckt.

Das linke und das rechte vertikale Rahmenteil 102, 104 sind parallel zueinander und in Transportrichtung angeordnet. Zwischen ihnen sind die erste und die zweite Walze 120, 122 sowie eine dritte Walze 124 horizontal ageordnet. Auf ihnen läuft das Transportband T um.

Wie weiterhin in Fig. 3 zu sehen ist, ist die Basisplattform B des Auslaufs 100 nicht fest mit dem Maschinenrahmen verbunden, sondern mittels eines Gelenks G an diesem befestigt. Das Gelenk G wird dabei durch eine erste horizontale Lasche 130 des Maschinenrahmens sowie eine zweite horizontale Lasche 132 der Basis B gebildet. Die Laschen 130, 132 weisen eine in ihrer Mitte angeordnete Bohrung auf, an der sie vertikal übereinander ausgerichtet sind. Ein Bolzen 134, z.B. eine Schraube, ist in den Bohrungen der Laschen 130, 132 angeordnet und verbindet die Laschen 130, 134, sodass sie um die Längsachse des Bolzens 134 gegeneinander verschwenkbar gehalten sind.

Ein in Fig. 3 nicht näher gezeigter Feststellmechanismus, von dem lediglich der Knauf des Stellgriffs 150 zu sehen ist, ist unterhalb des Auslaufs 100 angeordnet und ermöglicht das Lösen und Arretieren des Auslaufs 100 in einer gewünschten Position.

Wie ebenfalls bereits erwähnt, ist die erste Walze 122 über eine Kardanwelle K antreibbar. Die Kardanwelle K ist mit der Walze 122 durch ein Kardangelenk verbunden, von dem aus die Kardanwelle K unterhalb des ersten Förderschneckenabschnitts 10 zu einem geeigneten Antrieb geführt wird.

Um ein Verschwenken des Auslaufs 100 zu ermöglichen, ohne die Kardanwelle K von der Walze 122 trennen zu müssen, ist die Kardanwelle K in ihrer axialen Länge veränderbar. Hierzu weist die Kardanwelle K einen ersten Abschnitt 140 auf, der als Polygonwelle ausgeführt ist. Im dargestellten Ausführungsbeispiel weist der erste Abschnitt 140 einen regelmäßigen sechseckigen Querschnitt auf.
Er kann aber auch jede andere Vieleckform haben.

Der zweite Abschnitt 142 der Kardanwelle K ist ein Hohlzylinder mit einem Innenquerschnitt, der dem Querschnitt des ersten Abschnitts 140 entspricht. Der erste Abschnitt 140 ist im zweiten Abschnitt 142 axial verschiebbar, bildet mit diesem aber einen Formschluss, sodass ein Drehmoment von einem auf den anderen Abschnitt 140, 142 übertragbar ist.

Es ist aber auch denkbar, das Gelenk der Kardanwelle K über dem Gelenk G in dessen Drehachse anzuordnen. Damit wäre eine Kardanwelle mit variabler Länge nicht mehr nötig.

Der in Fig. 3 gezeigte Auslauf 100 ist durch das Vorsehen des Gelenks G horizontal von dem ersten Förderschneckenabschnitt 10 wegschwenkbar. Der schwenkbare Auslauf 100 kann aber auch an bereits existierenden Austrageinrichtungen von Clipmaschinen nachgerüstet werden, wobei dieser dann beispielsweise einen eventuell vorhandenen nicht schwenkbaren Auslauf der Austrageinrichtungen ersetzt.

Fig. 4 zeigt den Auslauf 100 in der ausgeschwenkten Position. Es ist zu erkennen, dass das clipmaschinenseitige ende des Auslaufs 100 vom Clipmaschinenausgang weg geschwenkt werden kann. Hierdurch ist ein besserer Zugang zur Clipmaschine möglich, beispielsweise, um Umbau- oder Wartungsarbeiten auszuführen.

Die Funktion der erfindungsgemäßen Transportvorrichtung soll im Folgenden anhand des dargestellten Ausführungsbeispiels als Austragstrecke einer Clipmaschine beschrieben werden. Es sei aber angemerkt, dass die erfindungsgemäße Transportvorrichtung nicht auf diese Anwendung beschränkt ist.

Die Schlaufe S wird direkt nach oder noch während des Anbringens in bekannter Weise auf die Fangvorrichtung F aufgefädelt. Das Wurstprodukt W liegt produktionsbedingt parallel zur Austragstrecke auf dem Transportband T und wird direkt nach seiner Fertigstellung von diesem aus dem unmittelbaren Bereich der Clipmaschine ausgetragen. Dabei wird die die Fangvorrichtung F umgreifende Schlaufe S solange auf dieser weiterbewegt, bis sie den Auffädelkegel K passiert hat und sich auf dem ersten Förderschneckenabschnitt 10 befindet. Wie in Fig.1 zu sehen ist, endet hier der horizontale Abschnitt des Transportbandes T und geht in den nach unten geneigten Teil über. Hierdurch wird auch das Wurstprodukt aus seiner horizontalen Lage auf dem antreibbaren Transportband T in eine vertikale Position gebracht, in der es mittels der Schlaufe S frei an dem ersten Förderschneckenabschnitt 10 hängt. Bei dem Übergang des Wurstprodukts W aus der horizontalen in die vertikale Position verhindert die Führungsschiene 90 Schaukelbewegungen des Wurstprodukts W.

Der Antrieb des Transportbandes T ist mit den Antrieben der Clipmaschine und der Förderschnecken 10, 50 synchronisierbar, um einen reibungslosen Austrag des Wurstprodukts W zu garantieren.

Je nach Kaliber und/oder Länge des herzustellenden Wurstprodukts W wird vor Produktionsbeginn die Länge des ersten horizontalen Abschnitts des Transportbandes T mittels des Stellgriffs 110 an das Kaliber und/oder die Länge des Wurstprodukts W angepasst. Dabei wird zunächst der Stellgriff 110 gelöst und die erste Walze 122 horizontal im Langloch 116 verschoben. Anschließend wird die Walze 122 mittels des Stellgriffs 110 in dieser Position arretiert. Dabei wird aus Fig. 3 und 4 deutlich, dass sich durch das Verstellen der Länge des horizontalen Abschnitts des Transportbandes T gleichzeitig die Steigung des schräg nach unten geneigten zweiten Abschnitts des Transportbandes T ändert.

Die Förderschneckenabschnitte 10, 50 sind von einem gemeinsamen, nicht näher dargestellten Antrieb betätigt. Dieser Antrieb überträgt ein Antriebsmoment auf die beiden antreibbaren Stützrollen 26, 66, die in formschlüssigem Eingriff mit den Förderschneckenabschnitten 10, 50 und das Antriebsmoment auf diese übertragen. Durch die drehstarre Verbindung der Stützrollen 26, 66 mittels der ein Kardangelenk aufweisenden Welle 70 wird ein synchroner, d.h. drehzahlgleicher Antrieb der Förderschneckenabschnitte 10, 50 erreicht.

Durch die Drehbewegung der Förderschneckenabschnitte 10, 50 und die dadurch bedingte Förderbewegung der Schneckenprofile P auf der Oberfläche der Förderschneckenabschnitte 10, 50 wird das daran hängende Wurstprodukt W entlang der Transportvorrichtung weiter in Richtung des Übergabeelements UE bewegt.

Da sich die Schlaufe S zwischen zwei benachbarten Erhebungen des Schneckenprofils P bewegt, wird ihr Transport von den an deren Außenumfang anliegenden Stützrollen 24, 26, 44, 64, 66 während der Bewegung der Schlaufe S durch die Lagereinheiten 20, 40, 60 nicht beeinträchtigt.

Bei Erreichen des in Fig. 1 linken Endes des ersten Förderschneckenabschnitts 10 wird das an der Schlaufe S hängende Wurstprodukt W automatisch an den zweiten Förderschneckenabschnitt 50 übergeben. Dieser ragt mit seinem rechten Ende in das linke Ende des ersten Förderschneckenabschnitts 10, wodurch ein der Transportrichtung entgegen gerichteter Absatz vermieden wird, der den Weitertransport des Wurstprodukts W behindern könnte.

Befindet sich das Wurstprodukt W auf dem zweiten, abwärtsgerichteten Förderschneckenabschnitt 50, wird dieses entsprechend der Drehgeschwindigkeit des zweiten Förderschneckenabschnitts 50, die der des ersten Förderschneckenabschnitts 10 entspricht weitergefördert. Da sich das Schneckenprofil P über die gesamte Länge der Förderschneckenabschnitte 10, 50 erstreckt, kann das Wurstprodukt W auf dem abwärtsgerichteten Förderschneckenabschnitt 50 nicht unkontrolliert weiterrutschen. Ein ungleichmäßiger Transport sowie Behinderungen durch Aufstauungen werden hierdurch vermieden.

Erreicht das Wurstprodukt W das linke Ende des zweiten Förderschneckenabschnitts 50 rutscht es auf das gabelförmige Übergabeelement UE, wo es in einer Ausnehmung des gabelförmigen Endes hängen bleibt. Aus dieser Position wird das Wurstprodukt W durch bekannte Übernahmeelemente, wie an Kettenförderern bewegte Haken, entnommen und zur Weiterverarbeitung, beispielsweise zum Aufhängen auf Rauchstäbe, weitertransportiert.

Die erfindungsgemäße Transportvorrichtung wurde vorstehend anhand des dargestellten Ausführungsbeispiels als Austragstrecke 1 einer Clipmaschine beschrieben. Sie kann aber auch für andere Anwendungen eingesetzt werden, bei denen mit Aufhängeelementen versehene Produkte transportiert werden müssen. Es kann dann nötig sein, die Übergangselemente, wie dem Auffädelkegel K oder das Übergabeelement UE entsprechend anzupassen oder gegen geeignete andere Übergangselemente auszutauschen.

Anstelle des fest mit dem Maschinenrahmen verbundenen Auslaufs 100 entsprechend Fig. 1 kann aber auch ein schwenkbarer Auslauf 100 gemäß Fig. 3 und 4 vorgesehen sein. Dieser kann dann nach Produktionsende in der oben beschriebenen Weise von der Clipmaschine weggeschwenkt werden, um diese zu reinigen oder zu warten. Ein schwenkbarer Auslauf erleichtert auch vor Produktionsbeginn den Umbau oder andere Einstellarbeiten an der dann leichter zugänglichen Clipmaschine.

Es ist selbstverständlich ebenfalls möglich, ein Gelenk vorzusehen, mittels dem der Auslauf 100 in einer vertikalen Ebene verschwenkbar ist. Lässt sich der Auslauf 100 beispielsweise nach unten verschwenken, wird damit sowohl der Zugang zur Clipmaschine als auch zu den Tarnsportschneckenabschnitte 10, 50 und deren Antrieben und Lagern erleichtert

Ebenso ist die Verwendung der erfindungsgemäßen Transportvorrichtung nicht auf Produkte beschränkt, die Schlaufen als Aufhängeelemente besitzen. Es können ebenfalls entsprechend geformte Haken oder Ösen zum Einsatz gebracht werden.

Es ist weiterhin möglich, andere als die dargestellten Ausrichtungen der Förderschneckenabschnitte 10, 50 zu wählen Durch die Zwangsführung über die gesamte Länge der Förderschneckenabschnitte 10, 50 kann ebenfalls ein Transport eines Förderschneckenabschnitts realisiert werden, der eine Steigung aufweist.

Selbstverständlich können auch mehr als zwei Förderschneckenabschnitte miteinander zu einer Transportvorrichtung verbunden werden, wodurch mehr als eine Richtungsänderung erzielt werden kann und die Transportvorrichtung noch flexibler gestaltet und einsetzbar ist.

Auch die Gestaltung des Schneckenprofils ist nicht auf das dargestellte trapezförmige Gewinde beschränkt. Es kann je nach Anwendung einen anderen Querschnitt, beispielsweiseein Spitzgewinde mit unterschiedlichen Flankenwinkeln, oder eine andere Steigung aufweisen.

## Patentansprüche

1. Transportvorrichtung mit einer Förderschnecke zum Transportieren von an Schlaufen (S) oder dergleichen hängenden Produkten, insbesondere Wurstprodukte (W), mit einem ersten Förderschneckenabschnitt (10), einer Antriebseinrichtung für den ersten Förderschneckenabschnitt (10), wobei das Antriebsmoment über die Außenumfangsfläche des ersten Förderschneckenabschnitts (10) auf diesen übertragen wird und mit einer ersten Lagereinrichtung (20) für den ersten Förderschneckenabschnitt (10), **dadurch gekennzeichnet, dass** ein sich in Förderrichtung unmittelbar an den ersten Förderschneckenabschnitt (10) anschließender zweiter Förderschneckenabschnitt (50) vorgesehen ist, wobei
der erste und der zweite Förderschneckenabschnitt (10, 50) als Hohlwelle gestaltet ist, wobei das rechte Ende des zweiten Förderschneckenabschnitts (50) in das linke Ende des ersten Förderschneckenabschnitts (10) eintaucht.

2. Transportvorrichtung nach Anspruch 1,
**dadurch gekennzeichnet, dass** die Mittellängsachse des zweiten Förderschneckenabschnitts (50) gegenüber der Mittellängsachse des ersten För derschneckenabschnitts (10) eine Winkelabweichung aufweist.

3. Transportvorrichtung nach einem der Ansprüche 1 bis 2,
**dadurch gekennzeichnet, dass** der erste Förderschneckenabschnitt (10) eine zweite Lagereinrichtung (40) aufweist.

4. Transportvorrichtung nach einem der Ansprüche 1 bis 3,
**dadurch gekennzeichnet, dass** der zweite Förderschneckenabschnitt (50) wenigstens eine Lagereinrichtung (60) aufweist.

5. Transportvorrichtung nach den Ansprüchen 1 bis 4,
**dadurch gekennzeichnet, dass** die Lagereinrichtungen (20, 40, 60) des ersten Förderschneckenabschnitts (10) und /oder des zweiten Förderschneckenabschnitts (50) jeweils durch drei vorzugsweise in einer gleichmäßigen Teilung in Umfangsrichtung der Förderschneckenabschnitte (10, 50) angeordnete Stützrollen (24, 26, 44, 64, 66) gebildet sind.

6. Transportvorrichtung nach einem der Ansprüche 1 bis 5,
**dadurch gekennzeichnet, dass** der zweite Förderschneckenabschnitt (50) antreibbar ist.

7. Transportvorrichtung nach den Ansprüchen 1 bis 6,
**dadurch gekennzeichnet, dass** der zweite Förderschneckenabschnitt (50) synchron mit dem ersten Förderschneckenabschnitt (10) antreibbar ist.

8. Transportvorrichtung nach den Ansprüchen 1 bis 7,
**dadurch gekennzeichnet, dass** der erste und der zweite Förderschneckenabschnitt (10, 50) jeweils koaxial auf einem ersten und einem zweiten Achsabschnitt (12, 52) drehbar angeordnet ist.

9. Transportvorrichtung nach einem der vorstehenden Ansprüche,
**dadurch gekennzeichnet, dass** am zuführseitigen und/oder am abführseitigen Ende der Transportvorrichtung Ein- und/oder Ausfädelhilfen (K, Ü) für die Schlaufen (S) vorgesehen sind.

10. Transportvorrichtung nach einem der vorstehenden Ansprüche,
**dadurch gekennzeichnet, dass** im Bereich des ersten Förderschneckenabschnitts (10) ein Auslauf (100) für die Wurstprodukte (W) angeordnet ist.

11. Transportvorrichtung nach Anspruch 10,
**dadurch gekennzeichnet, dass** der Auslauf (100) ein antreibbares Transportband (T) aufweist.

12. Transportvorrichtung nach Anspruch 11,
**dadurch gekennzeichnet, dass** sich an einen ersten, horizontal ausgerichteten Abschnitt des Transportbandes (T) ein zweiter in Transportrichtung schräg nach unten geneigter zweiter Abschnitt anschließt.

13. Transportvorrichtung nach einem der vorstehenden Ansprüche 10-12,
**dadurch gekennzeichnet, dass** der Auslauf (100) mittels eines Gelenks (G), gegenüber dem ersten und zweiten Förderschneckenabschnitt verschwenkbar mit dem Maschinenrahmen verbunden ist.

## Claims

1. A transport device having a screw conveyor for transporting products hanging on loops (S) or the like, in particular for transporting sausage products (W), said transport device comprising a first screw conveyor section (10), a drive means for the first screw conveyor section (10), wherein the drive torque is transferred to said screw conveyor section via the outer circumferential area of the first screw conveyor section (10), and further comprising a first bearing assembly (20) for the first screw conveyor section (10),
**characterized in that** a second screw conveyor section (50) which immediately adjoins the first screw conveyor section (10) in the direction of transport is provided, the first and the second screw conveyor sections (10, 50) being embodied as hollow shafts, and the right-hand end of the second screw conveyor section (50) being inserted into the left-hand end of the first screw conveyor section (10).

2. The transport device of claim 1,
**characterized in that** the central longitudinal axis of the second screw conveyor section (50) has an angular deviation with respect to the central longitudinal axis of the first screw conveyor section (10).

3. The transport device of any one of claims 1 to 2,
**characterized in that** the first screw conveyor section (10) has a second bearing assembly (40).

4. The transport device of any one of claims 1 to 3,
**characterized in that** the second screw conveyor section (50) has at least one bearing assembly (60).

5. The transport device of any of claims 1 to 4,
**characterized in that** the bearing assemblies (20, 40, 60) of the first screw conveyor section (10) and/or of the second screw conveyor section (50) are each formed by three support wheels (24, 26, 44, 64, 66) which are preferably arranged at a uniform distance from each other in the circumferential direction of the screw conveyor sections (10, 50).

6. The transport device of any one of claims 1 to 5,
**characterized in that** the second screw conveyor section (50) can be driven.

7. The transport device of any one of claims 1 to 6,
**characterized in that** the second screw conveyor section (50) can be driven in synchrony with the first screw conveyor section (10).

8. The transport device of any one of claims 1 to 7,
**characterized in that** the first and the second screw conveyor sections (10, 50) are disposed rotatably and coaxially on a first and a second axle section (12, 52), respectively.

9. The transport device of any one of the preceding claims,
**characterized in that** feed and/or discharge guides (K, UE) for the loops (S) are provided at the infeed and/or the discharge ends of the transport device.

10. The transport device of any one of the preceding claims,
**characterized in that** a run-out (100) for the sausage products (W) is disposed in the region of the first screw conveyor section (10).

11. The transport device of claim 10,
**characterized in that** the run-out (100) has a driveable conveyor belt (T).

12. The transport device of claim 11,
**characterized in that** a second section sloping downward in the direction of transport adjoins a first, horizontally oriented section of the conveyor belt (T).

13. The transport device of any one of the preceding claims 10 to 12,
**characterized in that** the run-out (100) is connected to the machine frame pivotably in relation to the first and second screw conveyor sections by means of an articulated joint (G).

## Revendications

1. Dispositif de transport, comprenant un convoyeur à vis pour le transport de produits suspendus à des boucles (S) ou analogues, notamment de produits (W) de saucisse, comprenant un premier tronçon (10) de convoyeur à vis, un dispositif d'entraînement du premier tronçon (10) de convoyeur à vis, le couple d'entraînement étant transmis au premier tronçon (10) du convoyeur à vis par sa surface périphérique extérieure, et comprenant un premier dispositif (20) de palier pour le premier tronçon (10) du convoyeur à vis,
**caractérisé en ce qu'**il est prévu un deuxième tronçon (50) du convoyeur à vis se raccordant directement dans la direction de transport au premier tronçon (10) du convoyeur à vis, le premier et le deuxième tronçons (10, 50) du convoyeur à vis étant conformés en arbre creux, l'extrémité droite du deuxième tronçon (50) du convoyeur à vis rentrant dans l'extrémité gauche du premier tronçon (10) du convoyeur à vis.

2. Dispositif de transport suivant la revendication 1,
**caractérisé en ce que** l'axe longitudinal médian du deuxième tronçon (50) du convoyeur à vis est écarté angulairement de l'axe longitudinal médian du premier tronçon (10) du convoyeur à vis.

3. Dispositif de transport suivant l'une des revendications 1 à 2, **caractérisé en ce que** le premier tronçon (10) du convoyeur à vis a un deuxième dispositif (40) de palier.

4. Dispositif de transport suivant l'une des revendications 1 à 3,
**caractérisé en ce que** le deuxième tronçon (50) du convoyeur à vis a au moins un dispositif (60) de palier.

5. Dispositif de transport suivant les revendications 1 à 4,
**caractérisé en ce que** les dispositifs (20, 40, 60) de palier du premier tronçon (10) de convoyeur à vis et/ou du deuxième tronçon (50) du convoyeur à vis sont formés respectivement par trois galets (24, 26, 44, 64, 66) d'appui répartis, de préférence suivant un pas uniforme, dans la direction périphérique des tronçons (10, 50) du convoyeur à vis.

6. Dispositif de transport suivant l'une des revendications 1 à 5,
**caractérisé en ce que** le deuxième tronçon (50) du convoyeur à vis peut être entraîné.

7. Dispositif de transport suivant les revendications 1 à 6,
**caractérisé en ce que** le deuxième tronçon (50) du convoyeur à vis peut être entraîné en synchronisme avec le premier tronçon (10) du convoyeur à vis.

8. Dispositif de transport suivant les revendications 1 à 7,
**caractérisé en ce que** le premier et le deuxième tronçons (10, 50) du convoyeur à vis sont montés tournant, respectivement coaxialement, à un premier et à un deuxième tronçons (12, 52) d'axe.

9. Dispositif de transport suivant l'une des revendications précédentes,
**caractérisé en ce que** des aides (K, Ü) d'entrée et/ou de sortie des boucles (S) sont prévues à l'extrémité du côté de l'entrée et/ou à l'extrémité du côté de la sortie.

10. Dispositif de transport suivant l'une des revendications précédentes,
**caractérisé en ce qu'**une sortie (100) des produits (W) de saucisse est disposée dans la région du premier tronçon (10) du convoyeur à vis.

11. Dispositif de transport suivant la revendication 10,
**caractérisé en ce que** la sortie (100) a une bande (T) transporteuse, qui peut être entraînée.

12. Dispositif de transport suivant la revendication 11,
**caractérisé en ce qu'**à un premier tronçon horizontal de la bande (T) transporteuse se raccorde un deuxième tronçon incliné vers le bas en oblique par rapport à la direction de transport.

13. Dispositif de transport suivant l'une des revendications précédentes 10 à 12,
**caractérisé en ce que** la sortie (100) est reliée au bâti de la machine au moyen d'une articulation (G), de manière à pouvoir basculer par rapport au premier et au deuxième tronçons du convoyeur à vis.
